# EUROPEAN PATENT SPECIFICATION

(11) **EP 1 389 402 B1**
(45) Date of publication and mention of the grant of the patent: **26.09.2007**
(21) Application number: 02733716.1
(22) Date of filing: 17.05.2002
(51) Int. Cl.: H04Q 7/38, H04Q 7/34, H04B 17/00, H04Q 7/22

(54) **A METHOD AND APPARATUS FOR LINK QUALITY ESTIMATION IN A MOBILE COMMUNICATION NETWORK**
VERFAHREN UND VORRICHTUNG ZUR STRECKENQUALITÄTSSCHÄTZUNG IN EINEM MOBILKOMMUNIKATIONSNETZ
PROCEDE ET APPAREIL POUR ESTIMER LA QUALITE D'UNE LIAISON DANS UN RESEAU DE COMMUNICATION MOBILE

(30) Priority: 21.05.2001 SE 0101793
(43) Date of publication of application: 18.02.2004
(73) Proprietor: TELEFONAKTIEBOLAGET LM ERICSSON (publ), 164 83 Stockholm (SE)
(72) Inventor: SCHRAMM, Peter, 91058 Erlangen (DE); CRAIG, Stephen, G., S-118 47 Stockholm (SE); HÖÖK, Mikael, S-191 34 Sollentuna (SE)
(74) Representative: Kühn, Friedrich Heinrich
(86) International application number: PCT/SE2002/000960
(87) International publication number: WO 2002/096149

(56) References cited:
- EP-A- 0 886 453
- WO-A-01/22600
- WO-A1-00/69205
- US-A- 5 966 657
- MOULY M., PAULET M-B.: 'The GSM system for mobile communications', 1992, CELL & SYS., ISBN 2-9507190-0-7 pages 233, 256 - 257, XP002970691

## Description

### TECHNICAL FIELD

The present invention relates generally to a method and apparatus for estimating the quality of a communication link between a mobile station and a base station, which may be used to select a base station for connection. In particular, the invention provides more reliable link quality measurements by the mobile station.

### BACKGROUND OF THE INVENTION AND PRIOR ART

A mobile communication network typically includes a plurality of base stations being connected together by means of switching nodes such as a Base Station Controller (BSC) and/or a Mobile Switching Centre (MSC). Each base station provides radio coverage over an area known as a cell for radio communication with mobile stations located therein. Each mobile network is allocated a certain limited radio frequency spectrum for transmissions, and efforts are made by network designers to provide the greatest possible traffic capacity within the allocated spectrum. In other words, the number of possible ongoing call connections over radio channels is maximised.

In a TDMA-based cellular network, each cell is typically allocated a number of specified radio frequency channels to be used for call connections and for broadcasting information to mobile stations. Typically, the closest neighbour cells cannot use the same frequencies for connections and broadcasts since that would result in unacceptable levels of interference between the ongoing transmissions. Therefore, frequency channels are reused in cells at a sufficient distance as to not interfer too much with each other, in order to increase traffic capacity in the network. Cell planners are concerned with allocating frequencies to the cells in a network employing a reuse pattern, which is generally well-known in the art.

Great efforts are made to be able to employ as tight reuse pattern, i.e., short reuse distances, as possible in order to maximise traffic capacity. An important factor to consider is to select transmission power levels for calls and broadcasts as low as possible for reducing interference, and mechanisms have been proposed for obtaining an accurate power control for ongoing calls.

Another area of interest is the selection of the most appropriate base station (BS) for connection. If a mobile station (MS), being located in one cell and connected to a serving BS, moves away from that BS towards a neighbouring BS, the received signal strength or link quality of the old BS will decrease and that of the new BS will increase such that the new BS becomes more suitable for connection, requiring less transmission power. There are various known mechanisms for switching connection from the old BS to the new BS. This is often referred to as "handover" or "handoff" when the mobile station is in busy mode, i.e., engaged in a call, and "cell selection" or "cell reselection" when in idle mode, i.e., not engaged in a call but powered-on. This will commonly for both modes hereafter be referred to as "BS selection".

BS selection is a fundamental process whereby each MS aims to connect to an appropriate BS in order to maximise the connection link quality and minimise transmission power, and thus the interference to others. In most cellular networks of today, MSs are responsible for making measurements on signals from neighbouring BSs as well as from the serving BS, and reporting the results to the serving BS for comparison. To achieve this, each BS continuously transmits a signal on at least one so-called broadcast frequency upon which MSs in the network can make link quality measurements with respect to, e.g., signal strength and/or interference. By matching a certain measurement to a certain BS, the link quality of various BS candidates are compared, and an MS can then attempt to connect to the most appropriate BS during BS selection. In the vicinity of an MS there are typically many BS candidates to which BS selection could occur. In some systems, it is required that the MS qualifies the measurement by identifying a target BS before reporting it to the serving BS.

Clearly, measurements must be made on all the potential BS candidates in order to determine the most appropriate one for the connection. In order to correctly ascribe a certain measurement to a certain BS, each BS in the area must be able to uniquely identify itself by means of the broadcasted signal. When an MS initially connects to a BS, that BS transmits a measurement order including a list of neighbour BSs to be measured by the MS. Such a neighbour list is pre-defined for each cell and includes an identity and a broadcast frequency channel of each neighbour BS. The BS identity is in GSM referred to as the Base Station Identity Code (BSIC), which comprises a Network Colour Code (NCC) and a Base station Colour Code (BCC). The number of BSs included in the neighbour list is typically in the range of 10 - 32, depending on cell configurations in the network.

The MS then performs the link quality measurements according to the received neighbour list during periods when the MS is not transmitting or receiving signals of its own connection with the serving BS. When in idle mode, the MS is sleeping most of the time for saving battery and wakes up only occasionally, e.g., listening for paging messages or transmitting location updates, according to a predetermined schedule, leaving plenty of time for measurements. In busy mode, the MS normally transmits during a timeslot of an uplink TDMA frame and receives during a timeslot of a downlink TDMA frame. The uplink and downlink frames are offset from each other such that there are typically one or more free timeslot periods available for measurements between the busy ones. Measurements in busy mode are often referred to as MAHO (Mobile Assisted Handover) measurements.

There are some drawbacks in the measurement methods used or proposed so far, which will be outlined below. The present invention is concerned with reducing or eliminating these drawbacks.

In present measurement methods when measuring a particular target BS according to the neighbour list, the MS tunes to the specified channel frequency and measures the link quality thereof. The MS also tries to decode or detect the received signal on that frequency in order to read an identity code for the target BS, e.g., the BSIC, by receiving at least one burst during a timeslot containing that identity code. In GSM, the BSIC is included in bursts of the logical synchronisation channel (SCH). However, the measuring and decoding are at present separated in time such that they are performed on different received bursts. Several problems may then arise:
1) The interference level may be too high at the moment of decoding such that the MS fails to decode the received signal, although the measurement may indicate a strong BS candidate. At least one broadcast channel frequency is transmitted continuously at a predetermined power level by each BS. Mobile networks are typically configured so that the broadcast frequencies are reused at the closest possible distances, which typically results in interference problems in some areas.
2) The MS may decode the identity of another BS which reuses the same frequency as the target BS, if the signal from the wrong BS happens to be stronger due to the signal propagation conditions during the decoding attempt. Therefore, the measurement may be ascribed to the wrong BS. Moreover, if the correct identity, e.g., BSIC, was decoded earlier, all measurements made on that frequency during the current measurement period are discarded, even though they may be valid measurements on an important handover candidate.
3) The BS identity code may not be included in the one or more bursts received from the target BS, since the broadcast channel includes a plurality of logical channels transmitted at different times according to a predetermined schedule. The logical channels may include a frequency correction channel (FCCH), a synchronisation channel (SCH) and other common or dedicated control channels as well as traffic channels for MS connections. Not all of these logical channels include a BS identity.

In prior solutions, the remedy for the interference problems referred to above has been to allocate a unique broadcast frequency to each BS in relatively large areas, resulting in a sparse frequency reuse. However, this gives rise to other problems since the number of available frequencies is limited and few are then left for call traffic. Since the capacity of pure traffic channel frequencies is much larger than that of broadcast frequencies, the sparse and inefficient reuse of broadcast frequencies constitutes a major limiting factor for overall system capacity.

In EP 0886453 A2, a method is described for identifying a neighbor BS in order to qualify field strength measurements made by an MS. The detection of BSIC is made more reliable by using frame timing difference data or data for discontinuous transmission, which data is received from a serving BS. This data is used to ensure that the BSIC is detected from the correct neighbor BS. However, no solution is described for connecting quality measurements to a particular neighbor BS.

If the MS fails to decode or detect an expected BS identity, the MS is typically configured to make further identification attempts, which will take some time. For example in GSM systems, the MS is configured to make three additional identification attempts before discarding a particular measurement. Even if the first attempt is successful, it could take typically 5 seconds after the measurement before the result is reported to the serving BS. For each additional identification attempt, the delay increases by 2.4 seconds. Furthermore, a reported measurement is typically an average value of measurements on plural received bursts. Therefore, when the MS finally succeeds with decoding the expected BS identity and transmits the measurement report to the serving BS, the earlier made measurements may be more or less out of date, especially in the case of a fast moving MS. This may lead to a situation where a good BS candidate is disregarded. Furthermore, the measured signal is the sum of all signals transmitted from several sources reusing the same frequency, and the total measured signal strength and/or quality may thus be further misleading.

Another problem is that there is a limited amount of time between the required measurement reports. Again in GSM systems by way of example, the MS is required to send reports for the six strongest neighbour BSs every 480 ms, sometimes referred to as the averaging period, provided that the identities of those six BSs have been successfully decoded. Since the measurements must be made for one BS after the other, there is a trade-off between a long neighbour list and a short one. A long list includes many potential BS selection candidates, each of which can be briefly measured. On the other hand, a shorter list may miss some important candidates, but those included may be measured for a longer time, i.e., more accurately.

Furthermore, the impact of inaccurate measurement reports may extend to affect the accuracy of network configurations, since neighbour BS measurements are often used to calculate cell relations forming a basis for network planning.

To conclude, it is of great importance to obtain reliable neighbour BS measurements with high accuracy, and to minimise the delay time between measurements and corresponding reports in order to improve BS selection procedures and network planning. It is also desirable to reduce the impact of interference on the measurements, thereby allowing for tighter frequency reuse.

### SUMMARY OF THE INVENTION

The object of this invention is to reduce or eliminate the problems outlined above. This object and others are obtained by providing a method and apparatus for performing link quality estimation of a TDMA-based wireless communication link between a mobile station and a target base station. The mobile station receives a signal on a channel frequency of the target base station, and a link quality of the received signal is measured by the mobile station. The target base station is simultaneously identified based on the same received signal, wherein the measurement is qualified if the mobile station has succeeded to identify the target base station. Otherwise, the measurement is discarded if the mobile station has failed to identify the target base station.

The measuring and identifying are thus performed simultaneously based on the same received signal. The mobile station may or may not be connected to a serving base station. If so, the measured target base station is a neighbouring base station, wherein the mobile station later reports the measurement to the serving base station, if the measurement is qualified by the expected neighbouring base station being identified properly. Link quality measurements can then be tied to specific base stations more reliably, and are at the same time up to date when reported. Further, the mobile station may be directed by the serving base station in a measurement order to select a measuring and identifying scheme which is pre-programmed in the mobile station.

The received signal is preferably measured with respect to at least one of: received signal strength (RSS), carrier-to-interference power ratio (C/I), carrier power, and bit error rate (BER).

According to specific aspects of the invention, the received signal may include an identity of the base station which is detected by the mobile station. The received signal may further include a synchronisation channel burst from the base station including the identity.

The received signal may further include a burst from the base station including a training sequence which is estimated by the mobile station. The training sequence is then related to an identity of the base station in a way that is known by the mobile station. The identity can thus be derived from the estimated training sequence based on the known relation. A code of the training sequence may further be identical to the identity of the target base station. The burst from the target base station may be a dummy burst including the training sequence being related to the identity of the target base station.

Identifying the target base station may include attempting to detect the received signal using at least two different modulation forms. The received signal may include a dummy burst including an identity of the target base station.

Channel estimation may be conducted on the received signal with respect to the target base station for performing at least one of the measuring and identifying steps. If one or more channel estimates are derived from the received signal, the channel estimates can be determined for a set of pre-determined training sequences, a selection metric can be calculated, and the training sequence that yields the greatest selection metric can be selected.

If the target base station is unsynchronised with the mobile station, a burst of a synchronisation channel may be received by the mobile station for obtaining timing information. The target base station can then be identified based on the obtained timing information.

The received signal preferably includes a complete burst period.

If the received signal includes contributions, from a plurality of unsynchronised target base stations transmitting on the same frequency channel, measuring and identifying may be performed with respect to one target base station at a time sequentially for at least two of the target base stations. On the other hand, if the received signal includes contributions from a plurality of synchronised target base stations transmitting on the same frequency channel, measuring and identifying may be performed with respect to the target base stations for at least two of the synchronised target base stations jointly in one operation.

The qualified measurement may be used for performing base station selection for serving the mobile station in idle or busy mode. The qualified measurement may also be used for estimating cell relations in order to perform network planning, or for determining the position of the mobile station.

The inventive procedure may be implemented in a mobile station having means for performing the procedure. The inventive procedure may further be executed by means of a computer program product comprising a software code being adapted for the method to be performed in a mobile station. The computer program product may be either directly loadable into the internal memory of a computer in the mobile station, or stored on a computer usable medium, including readable program for causing a computer in the mobile station to perform the method.

### BRIEF DESCRIPTION OF THE DRAWINGS

The present invention will now be described in more detail and with reference to the accompanying drawings, in which:
- Fig. 1 is a schematic view of a communication system in which radio link quality estimation is performed according to the invention.
- Fig. 2 is a schematic illustration of an exemplary TDMA burst.
- Fig. 3 is a flow chart illustrating the steps executed in a procedure according to one aspect of the invention.
- Fig. 4 is a flow chart illustrating the steps executed in a procedure according to another aspect of the invention.
- Fig. 5 is a schematic diagram illustrating a work flow in a mobile station according to a specific embodiment of the invention.

### DESCRIPTION OF PREFERRED EMBODIMENTS

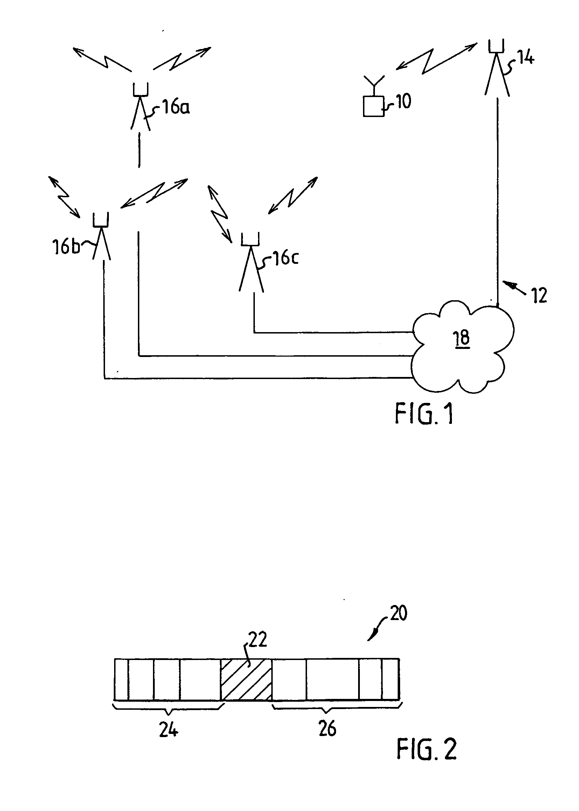

Fig. 1 is a schematic view of a cellular communication network 12 including a plurality of BSs. In this example, an MS 10 is currently connected to a serving BS 14. The MS 10 may be either in idle mode or in busy mode, as explained above. Initially, when the MS 10 has started the connection with the serving BS 14, the MS 10 receives from BS 14 a measurement order with a neighbour list including the broadcast frequencies and identities of a plurality of predetermined neighbouring BSs, of which three are shown, 16a - 16c. If the MS 10 is in idle mode, the neighbour list is received over a control channel on a broadcast frequency channel containing various cell information. If the MS 10 is in busy mode, i.e., is handed over from an old BS, not shown, to the new serving BS 14, the neighbour list may be received over a logical control channel embedded in the traffic channel used.

In both cases, the MS 10 is thereby ordered to perform link quality measurements on the specified broadcast frequencies during idle periods, and to send reports to the serving BS 14 according to a predetermined schedule. The schedule may be specified in the measurement order or may be pre-programmed in the MS 10. Alternatively, the MS 10 may as yet be unconnected to any serving BS, like for example when the MS 10 has just been powered on. The MS then scans for broadcast frequencies and measures the strongest frequencies in order to register with a serving BS.

The link quality may be measured as at least one of: a received signal strength (RSS), a carrier-to-interference power ratio (C/I), a carrier power, a Bit Error Rate (BER) or any other link quality parameter. However, the invention is not limited to any particular measuring method or schedule.

The MS 10 must also identify the BS for each measurement in order to qualify the measurement, which means that the MS 10 receives at least one burst during a TDMA timeslot and attempts to read or estimate the received burst in order to determine an identity of the BS. The BS identification is typically helped by the MS 10 knowing from the received neighbour list which target BS to expect for each frequency.

According to one aspect of the invention, the measuring and identifying activities are performed simultaneously for each target BS based on the same received signal. In this context, "simultaneously" means that measuring and identifying are performed more or less in parallel by different functional units in the MS, albeit not necessarily exactly at the same time. If the MS 10 thus fails to identify the expected BS properly, the measurement is disregarded and a new identification attempt is made, which also involves a new simultaneous measurement. In this way, it is ensured that the measurement is really made for the identified BS, and that the measurement is up to date.

In GSM, a BS identity BSIC is included in bursts over the synchronisation channel SCH. In that case, the BS identification may be made by reading an SCH burst being measured.

The BS identity is in prior systems transmitted in certain logical channel bursts depending on the system defined protocol. As mentioned above for GSM, the Base Station Identity Code BSIC includes the Network Colour Code NCC and the Base station Colour Code BCC. Furthermore, the broadcast frequency channel normally comprises a plurality of multiplexed logical channels including paging channels PCHs and the earlier mentioned common point-to-multipoint channels BCCH, FCCH and SCH, as well as dedicated point-to-point traffic channels TCHs. In GSM systems, the BSIC is normally included only in the SCH, and is not included in the other logical channels. If the MS is in busy mode, it may therefore take some time before it receives an SCH burst for reading the BSIC.

Moreover, all normal bursts typically include a training bit sequence, which in the GSM case is 26 bits long. Exceptions from "normal" bursts may be the FCCH burst which only contains a sinus wave for frequency synchronisation, and the SCH burst which contains a longer specific training sequence used for initial TDMA burst synchronisation.

The training sequence in a normal burst from a serving BS is known by the MS, and is used to facilitate synchronisation and decoding or detection of the burst. Typically, there is a set of known training sequences comprising, e.g., eight different sequences, and the one used in a particular burst is identified by a Training Sequence Code TSC of, e.g., 3 bits. For the common channels in GSM, the TSC is identical to the BCC, and for the other channels, the TSC is communicated in channel assignment messages.

According to another aspect of the invention, the BS identity is related to the training sequence code in a way that is known by mobile stations. An MS receiving a normal burst may then determine the BS identity, regardless of which logical channel the received burst belongs to, by estimating the training sequence and deriving the training sequence code therefrom. In the simplest case, the BS identity is set to be identical with the training sequence code. However, other relationships are possible.

Fig. 2 illustrates schematically an exemplary normal burst 20 transmitted in a timeslot of a broadcast frequency channel from a target BS included in the neighbour list received by the MS. The normal burst 20 may belong to any logical channel and includes a bit field 22 with a training sequence, in this case arranged approximately in the middle of the burst. The burst 20 may further include various fields 24, 26 such as data bit fields, tail bit fields etc.

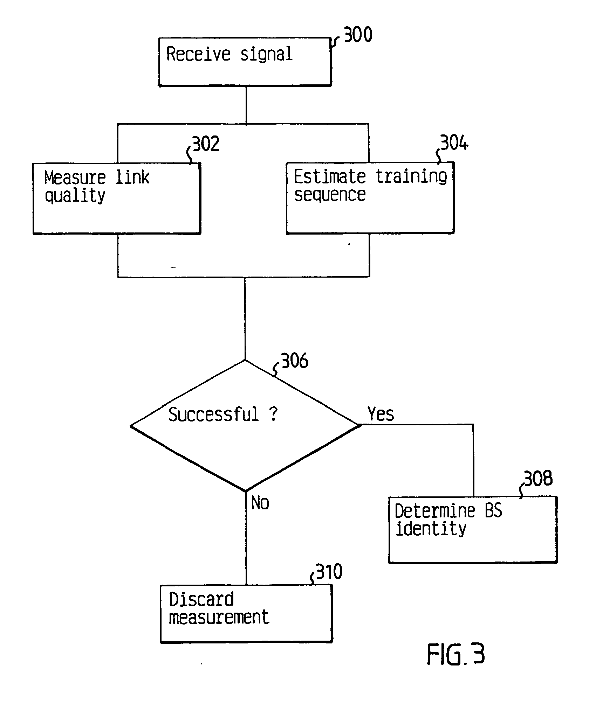

According to an embodiment of the invention and with reference to the flow chart in Fig. 3, the MS receives a radio signal in a first step 300, including a burst, or at least a part thereof, from a target BS. The MS measures the link quality of the burst 20 in step 302 and simultaneously attempts to estimate the training bit sequence in the bit field 22 in step 304, based on the same received burst. If it is determined in step 306 that the estimation attempt was successful, the MS is able to determine the BS identity in step 308 by deriving the training sequence code therefrom, as explained above. The measurement made in step 302 is then valid and can be used. However, if the estimation attempt was unsuccessful, the measurement is discarded in step 310.

In this way, there will be opportunities for the MS to determine the BS identity from all normal bursts. It should be added here that more than one measured signal may be needed to obtain a measurement average value. Furthermore, the training sequence estimation may involve known methods for detecting signals in noise and interference, such as maximum=likelihood detection algorithms or minimum mean-squared error methods.

Alternatively, the training sequence may be estimated by using channel estimation according to one aspect of the invention, which will be described below. Channel estimation is then conducted for several candidate training sequences, wherein the training sequence that maximises a certain selection metric is selected. An exemplary selection metric is the signal power estimate.

In some systems, e.g.; using EDGE (Enhanced Data rates for GSM/TDMA136 Evolution) technology, more than one modulation form may be used for BS transmissions, and hence further sets of training sequences. In EDGE for example, both 8PSK modulation and GMSK modulation may be used. In this case, the additional training sequences need also be considered during BS identification. For blind detection of modulation, an estimation attempt is required for each possible modulation form.

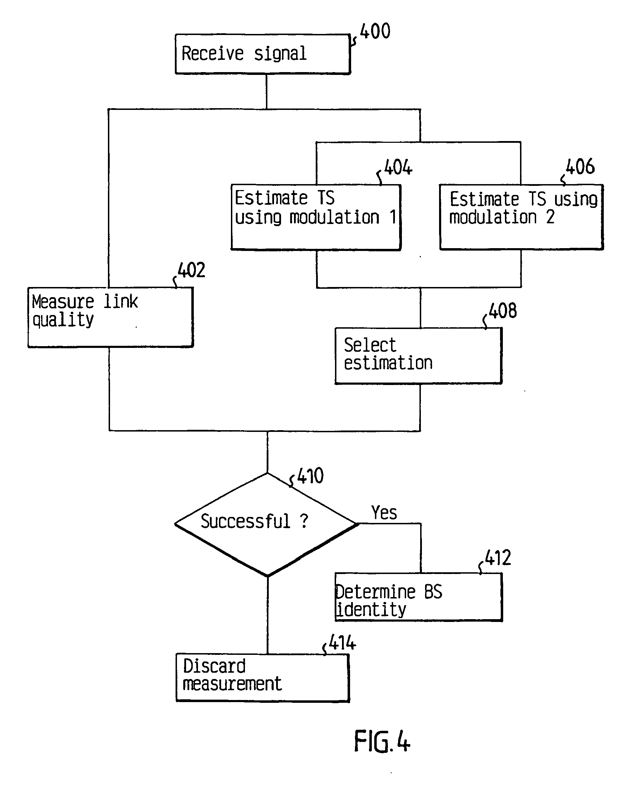

The flow chart in Fig. 4 illustrates an exemplary procedure for determining the link quality for a target BS included in a neighbour list according to another aspect of the invention. In this example, two different modulation forms 1 and 2 may be used by the target BS. In a first step 400, a signal or burst is received by an MS on a channel frequency to be measured according to the list. In step 402, the link quality of the received signal is measured with respect to a predetermined parameter, such as RSS.

In parallel with the measuring step 402, attempts are made to estimate the training sequence (TS) using modulation 1 in step 404 and using modulation 2 in step 406. In step 408, the most probable estimation from modulation 1 or 2 is selected depending on the result. In step 410, it is determined whether the selected estimation attempt was successful, and if so, the BS identity can be determined in step 412, thereby qualifying the measurement from step 402. On the other hand, if the selected estimation attempt was unsuccessful, the measurement made in step 402 is discarded in step 416.

In cellular networks, it is a general practice to transmit dummy bursts on broadcast frequency channels in timeslots not occupied by any logical channel in order to maintain continuous transmission. A dummy burst carries no intelligible information and typically, a predetermined bit pattern is transmitted. It is thus not possible to determine any BS identity from such dummy bursts, which may occur quite frequently. According to a further aspect of the invention, dummy bursts transmitted over broadcast frequency channels include a BS identity or a training sequence which is related to the BS identity. This will further increase the possibilities for mobile stations to determine the BS identity.

According to further aspects of the invention, a channel estimation procedure is used, as explained below, for determining the BS identity from a received signal.

Channel estimation is a well-known method used for estimating a physical channel from received radio signals during an ongoing connection with a serving BS. Channel estimation is conducted at a receiver in the MS for a given TSC based on the corresponding training sequence. Typically, the purpose of channel estimation is to determine a channel impulse response for facilitating the decoding of control data and user data included in the signal. Other purposes for using channel estimation may be to enhance link quality measurements and training sequence estimations, which can hence be used for BS indentification, according to the present invention.

A received total signal is the sum of contributions from plural BSs reusing the same frequency. The signal contribution from each BS may be a superposition of various propagation reflections of the signal transmitted by the BS, arriving with different delays at the MS. The receiver experiences effectively the signal sent over a physical channel with various channel taps. This channel and its taps may thus be estimated in the receiver by means of channel estimation. As mentioned above, this can be used for estimating a training sequence. When determining which training sequence has most likely been inserted into the transmitted signal, the training sequences, or the equivalent TSCs, may be mapped to BS identities for determining the BS identity according to the present invention.

Furthermore, an estimate of the received signal power can be calculated as the sum of the squared absolute channel taps. Interference and/or noise power may also be estimated therefrom, and the carrier-to-interference power ratio C/I can be estimated from the signal power and the interference and/or noise power. There are numerous known techniques for channel estimation available, e.g., the so-called least-squares estimation, which will not be described further since the present invention is not concerned with any particular channel estimation method or equipment.

In prior known mobile systems, channel estimation is only conducted by MSs for signals of the connection with a serving BS. According to one embodiment of the invention, channel estimation is performed on a received signal of a frequency channel for identifying one or more BSs, e.g., according to the neighbour list. Channel estimation can further be used for measuring the link quality, either together with the training sequence estimation or in a separate calculation step.

An exemplary embodiment of training sequence estimation comprises determining the channel estimates for a set of pre-determined training sequences, calculating a selection metric, and selecting the training sequence that yields the maximum selection metric. The maximum selection metric indicates that the corresponding training sequence was the one most likely transmitted. The set of pre-determined training sequences may be chosen in accordance with the respective TSCs that are mapped to the BS identities in the neighbour list. An exemplary selection metric is the signal power or the C/I estimate derived from the obtained channel estimate as explained above. For instance, the training sequence leading to the maximum signal power or the maximum C/I estimate may be selected. By mapping the selected training sequence to a BS in the neighbour list, the simultaneously made measurement is thus ascribed to that BS for inclusion in the measurement report.

The link quality measurement may also be obtained by conducting channel estimation for signals from a BS in the neighbour list. Such measurements may be signal power and C/I estimates, which may also be used as selection metric. The benefit of such measurements is that channel estimation inherently separates the wanted signal of the target BS from unwanted signals of other BSs and noise. The accuracy of the measurements is thereby enhanced compared to previous methods based on RSS.

According to one aspect of the invention, the received signal includes a complete burst period, thus enabling the MS to read any information embedded therein.

A mobile network may include BSs that are either mutually synchronised or unsynchronised with respect to downlink TDMA burst transmissions. In the case of a mobile network having unsynchronised BSs, an MS needs to scan complete burst periods for detecting training sequences properly, since the time of start and end, respectively, of a burst from a neighbouring BS is not known by the MS. However, this may sometimes be unsuccessful, given the limited time available for receiving other signals than those of a serving BS when the MS is in busy mode. Therefore, the MS may receive only a part of a burst from the neighbouring BS, which may not contain the entire training sequence, depending on an estimation window size. Moreover, the performance of training sequence estimation decreases with increasing estimation window.

According to a further aspect of the invention, the MS may determine the time of the burst period from the target BS by first searching for a burst synchronisation channel, SCH in the GSM example, on the broadcast frequency. A burst synchronisation channel can be detected and decoded reliably since it typically includes a longer training sequence than for normal bursts. From this logical channel, the MS can obtain timing information of burst periods from this particular BS. This timing information, e.g., in the form of an estimated time offset in relation to the serving BS, may then be used for measuring and decoding of normal bursts, and may also be stored in the MS for later measurements on this frequency channel.

In the case that bursts from a plurality of unsynchronised BSs reusing the same frequency channel are included in the received signal, the simultaneous measuring and BS identification can be performed by the MS from the different received signal parts coming from the target BSs, constituting the sum of signals simultaneously received from those target BSs on the same frequency. The received total signal can then be evaluated sequentially with respect to each of the target BSs, one at a time, preferably using channel estimation, by detecting the respective training sequences.

On the other hand, if the target BS is burst synchronised with the serving BS and the MS, it will be much easier for the MS to read a normal burst therefrom and estimate the training sequence properly, since the MS will automatically know where it occurs within the burst in relation to its own synchronisation with the serving BS. In a network with synchronised BSs, the bursts and the training sequences therein will thus arrive to the MS approximately at the same time from plural surrounding BSs, at least within relatively small distances.

In the case that bursts from a plurality of synchronised BSs reusing the same frequency channel are included in the received signal, the simultaneous measuring and BS identification can be performed by the MS from a part of the received signal that is the sum of signals simultaneously received from those target BSs on the same frequency. The received total signal can then be evaluated sequentially with respect to each of the target BSs, one at a time, preferably using channel estimation, by detecting the respective training sequences.

Alternatively, it is also possible to perform the evaluation with respect to each BS jointly for plural BSs, reusing the same frequency, on the same received total signal using channel estimation. In this case, the presence of overlaid synchronised training sequences of the BSs is utilised in a joint training sequence estimation procedure that estimates a set of transmitted training sequences, e.g., according to a maximum-likelihood or minimum mean-squared error criterion. A joint channel estimation that estimates the radio channels simultaneously with respect to all target BS signals may thus be used for this purpose. This will of course involve increased complexity, but since plural BSs are measured and identified simultaneously, the processing speed may be increased, and the measurement accuracy may be improved considerably.

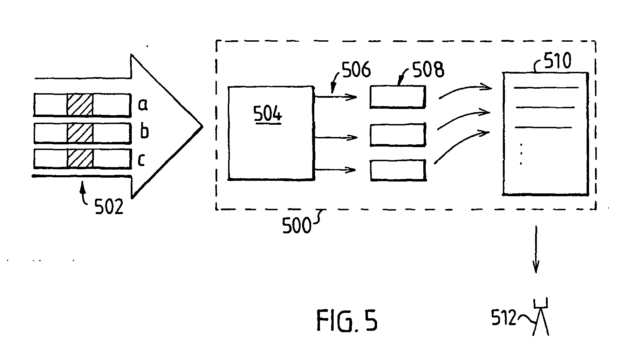

This is illustrated in Fig. 5 as a schematic work flow in an MS 500 receiving a total signal 502. The signal 502 is the sum of synchronised bursts a - c from three BSs transmitting on the same frequency. In this simplified example, further signal contributions from other BSs are not considered. The total signal 502 enters a channel estimation unit, represented by block 504. The channel estimation produces three channel estimates 506 corresponding to the three signal contributions from bursts a - c, respectively, by estimating the channels either sequentially or jointly. The three channel estimates 506 are then evaluated, i.e., measured and identified, in parallel, represented by blocks 508. It will be understood that the measuring and identifying procedure may also involve the received total signal 502 and further calculations in the channel estimation unit 504. If the respective BS identification was successful, the corresponding results are entered into a measurement report 510 which is finally transmitted to a serving BS 512. Alternatively, the results can be used by the MS to select a suitable BS to register with in the case of the MS having no serving BS.

The various embodiments described above have the purpose of increasing the accuracy and relevance of MS measurements on target BSs. The measurements can be tied to specific BSs more reliably, and are at the same time more up to date when reported and/or evaluated than in prior solutions. Furthermore, the inventive link quality estimation is more insensitive to interference, which allows for a tighter reuse of frequencies, in particular broadcast frequencies, in different cells of a mobile network. The tighter frequency reuse thereby enhances the overall traffic capacity in the network.

In a measurement order, the MS may be directed by a serving BS to select any of the various measuring and identifying schemes described above, all or some of which may be pre-programmed in the MS.

It has been assumed in the description above that the reported measurement results are primarily used for selecting the most suitable BS for connection with the MS, either just powered on, or in busy or idle mode. However, the measurement results can also be used for estimation of cell relations in order to support network planning. Cell relations include, e.g., an estimated level of interference if the cells are allocated the same or adjacent frequency channels for transmissions. Typical network planning tasks that may be performed based on estimated cell relations include: setting cell patterns and transmission power levels, making antenna adjustments and setting frequency allocation parameters and handover thresholds.

The invention may be implemented in a computer program loadable into the internal memory of a computer in the mobile station (10), or in a computer program product stored on a computer usable medium for controlling the mobile station (10).

While the invention has been described with reference to specific exemplary embodiments, the description is only intended to illustrate the inventive concept and should not be taken as limiting the scope of the invention. Various alternatives, modifications and equivalents may be used as defined by the appended claims.

## Claims

1. A method of performing link quality estimation of a TDMA-based wireless communication link between a mobile station (10) and a target base station (16a-c), wherein the mobile station (10) receives a signal on a channel frequency of the target base station (16a-c), **characterised by** the following steps, executed in the mobile station:
- measuring a link quality of the received signal, and simultaneously identifying the target base station (16a-c) in parallel with the measurement based on the same received signal, and
- qualifying the measurement as valid if the mobile station (10) has succeeded to identify the target base station (16a-c) based on the received and measured signal, or
- discarding the measurement if the mobile station (10) has failed to identify the target base station (16a-c) based on the received and measured signal.

2. A method according to claim 1, wherein the mobile station (10) is connected to a serving base station (14) and the target base station (16a-c) is a neighbouring base station, **characterised by** the further step of reporting the qualified measurement by the mobile station (10) to the serving base station (14).

3. A method according to claim 2, **characterised in that** the mobile station (10) is directed by the serving base station (14) in a measurement order to select a measuring and identifying scheme for performing the steps of measuring and identifying, wherein the scheme is pre-programmed in the mobile station (10).

4. A method according to any of claims 1 - 3, **characterised in that** the received signal is measured with respect to at least one of: received signal strength (RSS), carrier-to-interference power ratio (C/I), carrier power, and bit error rate (BER).

5. A method according to any of claims 1 - 4, **characterised in that** the received signal includes an identity of the target base station (16a-c) which is detected by the mobile station (10) .

6. A method according to claim 5, **characterised in that** the received signal includes a synchronisation channel burst from the target base station (16a-c) including the identity.

7. A method according to any of claims 1 - 4, wherein the received signal includes a burst from the target base station (16a-c) including a training sequence, **characterised in that** the identifying step includes the substeps of:
- estimating the training sequence by the mobile station (10), wherein the training sequence is related to an identity of the target base station (16a-c) in a way that is known by the mobile station (10), and
- deriving the target base station identity from the estimated training sequence based on the known relation.

8. A method according to claim 7, **characterised in that** a code of the training sequence is identical to the identity of the target base station (16a-c).

9. A method according to any of claims 1 - 8, **characterised in that** the identifying step includes attempting to detect the received signal using at least two different modulation forms.

10. A method according to any of claims 1 - 9, **characterised in that** the received signal includes a dummy burst including an identity of the target base station (16a-c).

11. A method according to claim 7 or 8, **characterised in that** the burst from the target base station (16a-c) is a dummy burst including the training sequence being related to the identity of the target base station (16a-c).

12. A method according to any of claims 1 - 4 and 7 - 11, **characterised in that** channel estimation is conducted on the received signal with respect to the target base station (16a-c) for performing at least one of the measuring and identifying steps.

13. A method according to claim 12, wherein one or more channel estimates are derived from the received signal, **characterised in that** identifying step includes the substeps of:
- determining the channel estimates for a set of pre-determined training sequences,
- calculating a selection metric, and
- selecting the training sequence that yields the greatest selection metric.

14. A method according to any of claims 1 - 13, wherein the target base station (16a-c) is unsynchronised with the mobile station (10), **characterised in that** the mobile station (10) receives a burst of a synchronisation channel for obtaining timing information, wherein the identifying step is based on the obtained timing information.

15. A method according to any of claims 1 - 14, **characterised in that** the received signal includes a complete burst period.

16. A method according to claim 12, wherein the received signal includes contributions from a plurality of unsynchronised target base stations transmitting on the same frequency channel, **characterised in that** the steps of measuring and identifying are performed with respect to one target base station at a time sequentially for at least two of the target base stations.

17. A method according to claim 12, wherein the received signal includes contributions from a plurality of synchronised target base stations transmitting on the same frequency channel, **characterised in that** the steps of measuring and identifying are performed with respect to the target base stations for at least two of the synchronised target base stations jointly in one operation.

18. A method according to any of claims 1 - 17, **characterised in that** the qualified measurement is used for at least one of: performing base station selection for serving the mobile station (10) in idle or busy mode, estimating cell relations and determining the position of the mobile station (10).

19. A mobile station (10) including means for receiving a signal on a channel frequency of a target base station (16a-c) for performing link quality estimation of a TDMA-based wireless communication link with the target base station (16a-c), **characterised in that** the mobile station (10) further includes:
- means for measuring a link quality of the received signal and for simultaneously identifying the target base station (16a-c) in parallel with the measurement based on the same received signal,
- means for qualifying the measurement as valid if the mobile station (10) has succeeded to identify the target base station (16a-c) based on the received and measured signal, and
- means for discarding the measurement if the mobile station (10) has failed to identify the target base station (16a-c) based on the received and measured signal.

20. A mobile station (10) according to claim 19, wherein the mobile station (10) is connected to a serving base station (14) and the target base station (16a-c) is a neighbouring base station, **characterised in that** the mobile station (10) further includes means for reporting the qualified measurement by the mobile station (10) to the serving base station (14).

21. A mobile station (10) according to claim 20, **characterised in that** the mobile station (10) further includes at least one pre-programmed measuring and identifying scheme, wherein the mobile station (10) is directed by the serving base station (14) in a measurement order to select a measuring and identifying scheme.

22. A mobile station (10) according to any of claims 19 - 21, **characterised in that** the measuring means measures the received signal with respect to at least one of: received signal strength (RSS), carrier-to-interference power ratio (C/I), carrier power and bit error rate (BER).

23. A mobile station (10) according to any of claims 19 - 22, **characterised in that** the identifying means detects an identity of the target base station (16a-c) included in the received signal.

24. A mobile station (10) according to any of claims 19 - 22, **characterised in that** the identifying means estimates a training sequence included in the received signal, wherein the training sequence is related to an identity of the target base station (16a-c) in a way that is known by the mobile station (10), and that the identifying means further derives the identity from the estimated training sequence based on the known relation.

25. A mobile station (10) according to any of claims 19 - 24, **characterised in that** the identifying means attempts to detect the received signal using at least two different modulation forms.

26. A mobile station (10) according to any of claims 19 - 22, 24 and 25, **characterised in that** the mobile station (10) further includes means for conducting channel estimation on the received signal with respect to the target base station (16a-c), which is used for measuring and identifying.

27. A mobile station (10) according to claim 26, wherein one or more channel estimates are derived from the received signal, **characterised in that** the mobile station (10) further includes:
- means for determining the channel estimates for a set of pre-determined training sequences,
- means for calculating a selection metric, and
- means for selecting the training sequence that yields the greatest selection metric.

28. A mobile station (10) according to any of claims 19 - 27, wherein the target base station (16a-c) is unsynchronised with the mobile station (10), **characterised in that** the mobile station (10) further includes means for receiving a burst of a synchronisation channel for obtaining timing information, wherein the identifying means uses the obtained timing information.

29. A mobile station (10) according to claim 26, wherein the received signal includes contributions from a plurality of unsynchronised target base stations transmitting on the same frequency channel, **characterised in that** the measuring and identifying means measures and identifies with respect to one target base station at a time sequentially for at least two of the target base stations.

30. A mobile station (10) according to claim 26, wherein the received signal includes contributions from a plurality of synchronised target base stations transmitting on the same frequency channel, **characterised in that** the measuring and identifying means measures and identifies jointly with respect to the target base stations for at least two of the synchronised target base stations in one operation.

31. A mobile station (10) according to any of claims 19 - 30, **characterised in that** the mobile station (10) further includes means for performing base station selection based on the measurement results.

32. A computer program product directly loadable into the internal memory of a computer in the mobile station (10), including software code means for performing when executed by the computer the method according to any of claims 1-18.

33. A computer program product stored on a computer usable medium, including readable program for causing a computer in the mobile station (10) to perform the method according to any of claims 1-18.

## Patentansprüche

1. Verfahren zur Durchführung einer Verbindungsstreckenqualitätsschätzung einer TDMA-gestützten drahtlosen Kommunikationsverbindungsstrecke zwischen einer Mobilstation (10) und einer Ziel-Basisstation (16a-c), wobei die Mobilstation (10) ein Signal auf einer Kanalfrequenz der Ziel-Basisstation (16a-c) empfängt, **gekennzeichnet durch** die folgenden Schritte, die in der Mobilstation ausgeführt werden:
Messen einer Verbindungsstreckenqualität des empfangenen Signals und gleichzeitiges Identifizieren der Ziel-Basisstation (16a-c) parallel zur Messung auf der Grundlage des gleichen empfangenen Signals, und
Bewerten der Messung als gültig, wenn es der Mobilstation (10) gelungen ist, die Ziel-Basisstation (16a-c) auf der Grundlage des empfangenen und gemessenen Signals zu identifizieren, oder
Verwerfen der Messung, wenn es der Mobilstation (10) nicht gelungen ist, die Ziel-Basisstation (16a-c) auf der Grundlage des empfangenen und gemessenen Signals zu identifizieren.

2. Verfahren nach Anspruch 1, wobei die Mobilstation (10) mit einer Serving-Basisstation (14) verbunden ist und die Ziel-Basisstation (16a-c) eine benachbarte Basisstation ist, **gekennzeichnet durch** den weiteren Schritt: Melden der bewerteten Messung **durch** die Mobilstation (10) an die Serving-Basisstation (14).

3. Verfahren nach Anspruch 2, **dadurch gekennzeichnet, dass** die Mobilstation (10) durch die Serving-Basisstation (14) in einem Messbefehl angewiesen wird, ein Mess- und Identifizierungsprinzip zur Durchführung der Mess- und Identifizierungsschritte auszuwählen, wobei das Prinzip in der Mobilstation (10) vorprogrammiert ist.

4. Verfahren nach einem der Ansprüche 1 bis 3, **dadurch gekennzeichnet, dass** das empfangene Signal mit Bezug auf mindestens eines von folgendem gemessen wird: empfangene Signalstärke (RSS), Träger-Störungs-Leistungsverhältnis (C/I), Trägerleistung und Bitfehlerrate (BER).

5. Verfahren nach einem der Ansprüche 1 bis 4, **dadurch gekennzeichnet, dass** das empfangene Signal eine Kennung der Ziel-Basisstation (16a-c) aufweist, die durch die Mobilstation (10) ermittelt wird.

6. Verfahren nach Anspruch 5, **dadurch gekennzeichnet, dass** das empfangene Signal einen Synchronisationskanal-Burst von der Ziel-Basisstation (16a-c) mit der Kennung aufweist.

7. Verfahren nach einem der Ansprüche 1 bis 4, wobei das empfangene Signal einen Burst von der Ziel-Basisstation (16a-c) mit einer Trainingssequenz aufweist, **dadurch gekennzeichnet, dass** der Identifizierungsschritt die folgenden Teilschritte aufweist:
Schätzen der Trainingssequenz durch die Mobilstation (10), wobei die Trainingssequenz mit einer Kennung der Ziel-Basisstation (16a-c) in einer Beziehung steht, die der Mobilstation (10) bekannt ist, und
Ableiten der Ziel-Basisstationskennung aus der geschätzten Trainingssequenz auf der Grundlage der bekannten Beziehung.

8. Verfahren nach Anspruch 7, **dadurch gekennzeichnet, dass** ein Code der Trainingssequenz mit der Kennung der Ziel-Basisstation (16a-c) identisch ist.

9. Verfahren nach einem der Ansprüche 1 bis 8, **dadurch gekennzeichnet, dass** der Identifizierungsschritt den folgenden Schritt aufweist: Versuchen, das empfangene Signal unter Verwendung von mindestens zwei unterschiedlichen Modulationsformen zu ermitteln.

10. Verfahren nach einem der Ansprüche 1 bis 9, **dadurch gekennzeichnet, dass** das empfangene Signal einen Dummy-Burst mit einer Kennung der Ziel-Basisstation (16a-c) aufweist.

11. Verfahren nach Anspruch 7 oder 8, **dadurch gekennzeichnet, dass** der Burst von der Ziel-Basisstation (16a-c) ein Dummy-Burst mit der Trainingssequenz ist, die mit der Kennung der Ziel-Basisstation (16a-c) in Beziehung steht.

12. Verfahren nach einem der Ansprüche 1 bis 4 und 7 bis 11, **dadurch gekennzeichnet, dass** die Kanalschätzung anhand des empfangenen Signals in Bezug auf die Ziel-Basisstation (16a-c) zur Durchführung mindestens eines der Mess- und Identifizierungsschritte vorgenommen wird.

13. Verfahren nach Anspruch 12, wobei ein oder mehrere Kanalschätzwerte aus dem empfangenen Signal abgeleitet werden, **dadurch gekennzeichnet, dass** der Identifizierungsschritt die folgenden Teilschritte aufweist:
- Bestimmen der Kanalschätzwerte für eine Menge von vorbestimmten Trainingssequenzen,
- Berechnen einer Auswahlmetrik, und
- Auswählen derjenigen Trainingssequenz, welche die größte Auswahlmetrik ergibt.

14. Verfahren nach einem der Ansprüche 1 bis 13, wobei die Ziel-Basisstation (16a-c) nicht mit der Mobilstation (10) synchronisiert ist, **dadurch gekennzeichnet, dass** die Mobilstation (10) zur Gewinnung von Taktinformation einen Burst eines Synchronisationskanals empfängt, wobei der Identifizierungsschritt auf der gewonnenen Taktinformation beruht.

15. Verfahren nach einem der Ansprüche 1 bis 14, **dadurch gekennzeichnet, dass** das empfangene Signal eine vollständige Burstperiode aufweist.

16. Verfahren nach Anspruch 12, wobei das empfangene Signal Beiträge von einer Vielzahl von nichtsynchronisierten Ziel-Basisstationen aufweist, die auf dem gleichen Frequenzkanal senden, **dadurch gekennzeichnet, dass** die Mess- und Identifizierungsschritte in Bezug auf eine Ziel-Basisstation jeweils einzeln für mindestens zwei der Ziel-Basisstationen nacheinander durchgeführt werden.

17. Verfahren nach Anspruch 12, wobei das empfangene Signal Beiträge von einer Vielzahl von synchronisierten Ziel-Basisstationen aufweist, die auf dem gleichen Frequenzkanal senden, **dadurch gekennzeichnet, dass** die Mess- und Identifizierungsschritte in Bezug auf die Ziel-Basisstationen für mindestens zwei der synchronisierten Ziel-Basisstationen gemeinsam in einem Arbeitsgang durchgeführt werden.

18. Verfahren nach einem der Ansprüche 1 bis 17, **dadurch gekennzeichnet, dass** die bewertete Messung für mindestens eines von folgendem verwendet wird: Durchführen der Basisstationsauswahl zur Versorgung der Mobilstation (10) in der Frei- oder Besetzt-Betriebsart, Schätzen von Zellenbeziehungen und Bestimmen der Position der Mobilstation (10).

19. Mobilstation (10) mit Mitteln zum Empfangen eines Signals auf einer Kanalfrequenz einer Ziel-Basisstation (16a-c) zur Durchführung einer Verbindungsstreckenqualitätsschätzung einer TDMA-gestützten drahtlosen Kommunikationsverbindungsstrecke mit der Ziel-Basisstation (16a-c), **dadurch gekennzeichnet, dass** die Mobilstation ferner aufweist:
- Mittel zum Messen einer Verbindungsstreckenqualität des empfangenen Signals und zum gleichzeitigen Identifizieren der Ziel-Basisstation (16a-c) parallel zur Messung auf der Grundlage des gleichen empfangenen Signals,
- Mittel zum Bewerten der Messung als gültig, wenn es der Mobilstation (10) gelungen ist, die Ziel-Basisstation (16a-c) auf der Grundlage des empfangenen und gemessenen Signals zu identifizieren, und
- Mittel zum Verwerfen der Messung, wenn es der Mobilstation (10) nicht gelungen ist, die Ziel-Basisstation (16a-c) auf der Grundlage des empfangenen und gemessenen Signals zu identifizieren.

20. Mobilstation (10) nach Anspruch 19, wobei die Mobilstation (10) mit einer Serving-Basisstation (14) verbunden ist und die Ziel-Basisstation (16a-c) eine benachbarte Basisstation ist, **dadurch gekennzeichnet, dass** die Mobilstation (10) ferner Mittel zum Melden der bewerteten Messung durch die Mobilstation (10) an die Serving-Basisstation (14) aufweist.

21. Mobilstation (10) nach Anspruch 20, **dadurch gekennzeichnet, dass** die Mobilstation (10) ferner mindestens ein vorprogrammiertes Mess- und Identifizierungsprinzip aufweist, wobei die Mobilstation (10) durch die Serving-Basisstation (14) in einem Messbefehl angewiesen wird, ein Mess- und Identifizierungsprinzip auszuwählen.

22. Mobilstation (10) nach einem der Ansprüche 19 bis 21, **dadurch gekennzeichnet, dass** das Messmittel das empfangene Signal mit Bezug auf mindestens eines von folgendem misst: empfangene Signalstärke (RSS), Träger-Störungs-Leistungsverhältnis (C/I), Trägerleistung und Bitfehlerrate (BER).

23. Mobilstation (10) nach einem der Ansprüche 19 bis 22, **dadurch gekennzeichnet, dass** das Identifizierungsmittel eine in das empfangene Signal aufgenommene Kennung der Ziel-Basisstation (16a-c) ermittelt.

24. Mobilstation (10) nach einem der Ansprüche 19 bis 22, **dadurch gekennzeichnet, dass** das Identifizierungsmittel eine in das empfangene Signal aufgenommene Trainingssequenz schätzt, wobei die Trainingssequenz mit einer Kennung der Ziel-Basisstation (16a-c) in einer Beziehung steht, die der Mobilstation (10) bekannt ist, und dass das Identifizierungsmittel ferner die Kennung auf der Grundlage der bekannten Beziehung aus der geschätzten Trainingssequenz ableitet.

25. Mobilstation (10) nach einem der Ansprüche 19 bis 24, **dadurch gekennzeichnet, dass** das Identifizierungsmittel versucht, das empfangene Signal unter Verwendung von mindestens zwei unterschiedlichen Modulationsformen zu ermitteln.

26. Mobilstation (10) nach einem der Ansprüche 19 bis 22, 24 und 25, **dadurch gekennzeichnet, dass** die Mobilstation (10) ferner Mittel zur Durchführung einer Kanalschätzung anhand des empfangenen Signals in Bezug auf diejenige Ziel-Basisstation (16a-c) aufweist, welche zur Messung und Identifizierung verwendet wird.

27. Mobilstation (10) nach Anspruch 26, wobei ein oder mehrere Kanalschätzwerte aus dem empfangenen Signal abgeleitet werden, **dadurch gekennzeichnet, dass** die Mobilstation (10) ferner aufweist:
- Mittel zum Bestimmen der Kanalschätzwerte für eine Menge von vorbestimmten Trainingssequenzen,
- Mittel zum Berechnen einer Auswahlmetrik, und
- Mittel zum Auswählen derjenigen Trainingssequenz, welche die größte Auswahlmetrik ergibt.

28. Mobilstation (10) nach einem der Ansprüche 19 bis 27, wobei die Ziel-Basisstation (16a-c) nicht mit der Mobilstation (10) synchronisiert ist, **dadurch gekennzeichnet, dass** die Mobilstation (10) ferner Mittel zum Empfangen eines Bursts eines Synchronisationskanals zur Gewinnung von Taktinformation empfängt, wobei das Identifizierungsmittel die gewonnene Taktinformation verwendet.

29. Mobilstation (10) nach Anspruch 26, wobei das empfangene Signal Beiträge von einer Vielzahl von nichtsynchronisierten Ziel-Basisstationen aufweist, die auf dem gleichen Frequenzkanal senden, **dadurch gekennzeichnet, dass** die Mess- und Identifizierungsmittel in Bezug auf eine Ziel-Basisstation jeweils einzeln für mindestens zwei der Ziel-Basisstationen nacheinander messen und identifizieren.

30. Mobilstation (10) nach Anspruch 26, wobei das empfangene Signal Beiträge von einer Vielzahl von synchronisierten Ziel-Basisstationen aufweist, die auf dem gleichen Frequenzkanal senden, **dadurch gekennzeichnet, dass** die Mess- und Identifizierungsmittel in Bezug auf die Ziel-Basisstationen für mindestens zwei der synchronisierten Ziel-Basisstationen gemeinsam in einem Arbeitsgang messen und identifizieren.

31. Mobilstation (10) nach einem der Ansprüche 19 bis 30, **dadurch gekennzeichnet, dass** die Mobilstation (10) ferner Mittel zum Durchführen einer Basisstationsauswahl auf der Grundlage der Messergebnisse aufweist.

32. Computerprogrammerzeugnis, das direkt in den internen Speicher eines Computers in der Mobilstation (10) ladbar ist, mit einem Softwarecode-Mittel zur Durchführung des Verfahrens nach einem der Ansprüche 1 bis 18, wenn es durch den Computer ausgeführt wird.

33. Computerprogrammerzeugnis, das auf einem computernutzbaren Medium gespeichert ist, mit einem lesbaren Programm zum Bewirken, dass ein Computer in der Mobilstation (10) das Verfahren nach einem der Ansprüche 1 bis 18 ausführt.

## Revendications

1. Procédé de réalisation d'une estimation de qualité de liaison d'une liaison de communication sans fil à base TDMA entre une station mobile (10) et une station de base cible (16a-c), dans lequel la station mobile (10) reçoit un signal sur une fréquence de canal de la station de base cible (16a-c), **caractérisé par** les étapes suivantes, exécutées dans la station mobile:
- mesure d'une qualité de liaison du signal reçu, et simultanément identification de la station de base cible (16a-c) en parallèle avec la mesure sur la base du même signal reçu, et
- qualification de la mesure en tant que valide si la station mobile (10) a réussi à identifier la station de base cible (16a-c) sur la base du signal reçu et mesuré, ou
- rejet de la mesure si la station mobile (10) a échoué à identifier la station de base cible (16a-c) sur la base du signal reçu et mesuré.

2. Procédé selon la revendication 1, dans lequel la station mobile (10) est raccordée à une station de base de desserte (14) et la station de base cible (16a-c) est une station de base voisine, **caractérisé par** l'étape supplémentaire de rapport de la mesure qualifiée par la station mobile (10) à la station de base de desserte (14).

3. Procédé selon la revendication 2, **caractérisé en ce que** la station mobile (10) est dirigée par la station de base de desserte (14) dans un ordre de mesure pour sélectionner une mesure et un système d'identification pour réaliser les étapes de mesure et d'identification, dans lequel le système est préprogrammé de la station mobile (10).

4. Procédé selon l'une quelconque des revendications 1 à 3, **caractérisé en ce que** le signal reçu est mesuré par rapport à au moins un: de la puissance du signal reçu (RSS), du rapport de puissance porteuse sur interférence (C/I), de la puissance de porteuse, et du taux d'erreur binaire (BER).

5. Procédé selon l'une quelconque des revendications 1 à 4, **caractérisé en ce que** le signal reçu comprend une identité de la station de base cible (16a-c) qui est détectée par la station mobile (10).

6. Procédé selon la revendication 5, **caractérisé en ce que** le signal reçu comprend une salve de canal de synchronisation à partir de la station de base cible (16a-c) comprenant l'identité.

7. Procédé selon l'une quelconque des revendications 1 à 4, dans lequel le signal reçu comprend une salve de la station de base cible (16a-c) comprenant une séquence d'apprentissage, **caractérisé en ce que** l'étape d'identification comprend les sous-étapes de:
- estimation de la séquence d'apprentissage par la station mobile (10), dans laquelle la séquence d'apprentissage est liée à une identité de la station de base cible (16a-c) d'une manière qui est connue par la station mobile (10), et
- dérivation de l'identité de la station de base cible à partir de la séquence d'apprentissage estimée sur la base de la relation connue.

8. Procédé selon la revendication 7, **caractérisé en ce qu'**un code de la séquence d'apprentissage est identique à l'identité de la station de base cible (16a-c).

9. Procédé selon l'une quelconque des revendications 1 à 8, **caractérisé en ce que** l'étape d'identification comprend l'essai de détecter le signal reçu en utilisant au moins deux formes de modulation différentes.

10. Procédé selon l'une quelconque des revendications 1 à 9, **caractérisé en ce que** le signal reçu comprend une salve fictive comprenant une identité de la station de base cible (16a-c).

11. Procédé selon la revendication 7 ou 8, **caractérisé en ce que** la salve de la station de base cible (16a-c) est une salve fictive comprenant la séquence d'apprentissage liée à l'identité de la station de base cible (16a-c).

12. Procédé selon l'une quelconque des revendications 1 à 4 et 7 à 11, **caractérisé en ce que** l'estimation de canal est effectuée sur le signal reçu par rapport à la station de base cible (16a-c) pour réaliser au moins une des étapes de mesure et d'identification.

13. Procédé selon la revendication 12, dans lequel une ou plusieurs estimations de canal sont dérivées à partir du signal reçu, **caractérisé en ce que** l'étape d'identification comprend les sous-étapes de:
- détermination des estimations de canal pour un ensemble de séquences d'apprentissage prédéterminé,
- calcul d'une mesure de sélection, et
- sélection de la séquence d'apprentissage qui donne la mesure de sélection la plus grande.

14. Procédé selon l'une quelconque des revendications 1 à 13, dans lequel la station de base cible (16a-c) est désynchronisée par rapport à la station mobile (10), **caractérisé en ce que** la station mobile (10) reçoit une salve d'un canal de synchronisation pour obtenir des informations de temporisation, dans lequel l'étape d'identification est sur la base des informations de temporisation obtenues.

15. Procédé selon l'une quelconque des revendications 1 à 14, **caractérisé en ce que** le signal reçu comprend une période de salve complète.

16. Procédé selon la revendication 12, dans lequel le signal reçu comprend des contributions à partir d'une pluralité de stations de base cibles désynchronisées transmettant sur le même canal de fréquence, **caractérisé en ce que** les étapes de mesure et d'identification sont réalisées par rapport à une station de base cible à un moment séquentiellement pour au moins deux stations de base cibles.

17. Procédé selon la revendication 12, dans lequel le signal reçu comprend les contributions à partir d'une pluralité de stations de base cibles synchronisées transmettant sur le même canal de fréquence, **caractérisé en ce que** les étapes de mesure et d'identification sont réalisées par rapport aux stations de base cibles pour au moins deux stations de base cibles synchronisées conjointement en une opération.

18. Procédé selon l'une quelconque des revendications 1 à 17, **caractérisé en ce que** la mesure qualifiée est utilisée pour au moins une de: la réalisation de la sélection de station de base pour servir la station mobile (10) dans un mode inactif ou occupé, l'estimation des relations de cellule et la détermination de la position de la station mobile (10).

19. Station mobile (10) comprenant un moyen pour recevoir un signal sur une fréquence de canal d'une station de base cible (16a-c) pour réaliser une estimation de qualité de liaison d'une liaison de communication sans fil à base TDMA avec la station de base cible (16a-c), **caractérisée en ce que** la station mobile (10) comprend en outre:
- un moyen pour mesurer une qualité de liaison du signal reçu et pour simultanément identifier la station de base cible (16a-c) en parallèle avec la mesure sur la base du même signal reçu,
- un moyen pour qualifier la mesure en tant que valide si la station mobile (10) a réussi à identifier la station de base cible (16a-c) sur la base du signal reçu et mesuré, et
- un moyen pour rejeter la mesure si la station mobile (10) a échoué à identifier la station de base cible (16a-c) sur la base du signal reçu et mesuré.

20. Station mobile (10) selon la revendication 19, dans lequel la station mobile (10) est raccordée à une station de base de desserte (14) et la station de base cible (16a-c) est une station de base voisine, **caractérisé en ce que** la station mobile (10) comprend en outre un moyen pour rapporter la mesure qualifiée par la station mobile (10) à la station de base de desserte (14).

21. Station mobile (10) selon la revendication 20, **caractérisé en ce que** la station mobile (10) comprend en outre au moins un système de mesure et d'identification préprogrammé, dans lequel la station mobile (10) est dirigée par la station de base de desserte (14) dans un ordre de mesure pour sélectionner un système de mesure et d'identification.

22. Station mobile (10) selon l'une quelconque des revendications 19 à 21, **caractérisée en ce que** le moyen de mesure mesure le signal reçu par rapport à au moins un de: la puissance de signal reçu (RSS), le rapport de puissance porteuse sur interférence (C/I), la puissance de porteuse et le taux d'erreur binaire (BER).

23. Station mobile (10) selon l'une quelconque des revendications 19 à 22, **caractérisée en ce que** le moyen d'identification détecte une identité de la station de base cible (16a-c) comprise dans le signal reçu.

24. Station mobile (10) selon l'une quelconque des revendications 19 à 22, **caractérisée en ce que** le moyen d'identification estime une séquence d'apprentissage comprise dans le signal reçu, dans laquelle la séquence d'apprentissage est liée à une identité de la station de base cible (16a-c) d'une manière qui est connue par la station mobile (10), et **en ce que** le moyen d'identification dérive en outre l'identité à partir de la séquence d'apprentissage estimée sur la base de la relation connue.

25. Station mobile (10) selon l'une quelconque des revendications 19 à 24, **caractérisée en ce que** le moyen d'identification essaie de détecter le signal reçu utilisant au moins deux formes de modulation différentes.

26. Station mobile (10) selon l'une quelconque des revendications 19 à 22, 24 et 25, **caractérisée en ce que** la station mobile (10) comprend en outre un moyen pour effectuer une estimation de canal sur le signal reçu par rapport à la station de base cible (16a-c), qui est utilisée pour la mesure et l'identification.

27. Station mobile (10) selon la revendication 26, dans laquelle une ou plusieurs estimations de canal sont dérivées à partir du signal reçu, **caractérisée en ce que** la station mobile (10) comprend en outre:
- un moyen pour déterminer des estimations de canal pour un ensemble de séquences d'apprentissage prédéterminé,
- un moyen pour calculer une mesure de sélection, et
- un moyen pour sélectionner la séquence d'apprentissage qui donne la mesure de sélection la plus grande.

28. Station mobile (10) selon l'une quelconque des revendications 19 à 27, dans laquelle la station mobile (16a-c) est désynchronisée avec la station mobile (10), **caractérisée en ce que** la station mobile (10) comprend en outre un moyen pour recevoir une salve d'un canal de synchronisation pour obtenir des informations de temporisation, dans lequel le moyen d'identification utilise les informations de temporisation obtenues.

29. Station mobile (10) selon la revendication 26, dans laquelle le signal reçu comprend des contributions à partir d'une pluralité de stations de base cibles désynchronisées transmettant sur le même canal de fréquence, **caractérisée en ce que** le moyen de mesure et d'identification mesure et identifie par rapport à une station de base cible à un instant séquentiellement pour au moins deux stations de base cibles.

30. Station mobile (10) selon la revendication 26, dans laquelle le signal reçu comprend des contributions à partir d'une pluralité de stations de base cibles synchronisées transmettant sur le même canal de fréquence, **caractérisée en ce que** le moyen de mesure et d'identification mesure et identifie conjointement par rapport aux stations de base cibles pour au moins deux des stations de base cibles synchronisées en une opération.

31. Station mobile (10) selon l'une quelconque des revendications 19 à 30, **caractérisée en ce que** la station mobile (10) comprend en outre un moyen pour réaliser une sélection de station de base sur la base des résultats de mesure.

32. Produit de programme informatique directement chargeable dans la mémoire interne d'un ordinateur dans la station mobile (10), comprenant un moyen de code logiciel pour réaliser lorsqu'il est exécuté par l'ordinateur, le procédé selon l'une quelconque des revendications 1 à 18.

33. Produit de programme informatique stocké sur un support utilisable informatique, comprenant un programme lisible pour conduire un ordinateur dans la station mobile (10) à réaliser le procédé selon l'une quelconque des revendications 1 à 18.
